# EUROPÄISCHE PATENTSCHRIFT

(11) **EP 1 754 566 B1**
(45) Veröffentlichungstag und Bekanntmachung des Hinweises auf die Patenterteilung: **24.02.2010**
(21) Anmeldenummer: 06011378.4
(22) Anmeldetag: 01.06.2006
(51) Int. Cl.: B23Q 11/04, B23Q 1/52

(54) **Rundschalttisch**
Turntable with stepping drive
Table à transfert circulaire munie d'un dispositif de commande

(30) Priorität: 16.08.2005 DE 102005038663
(43) Veröffentlichungstag der Anmeldung: 21.02.2007
(73) Patentinhaber: WEISS GmbH, 74722 Buchen (Odw.) (DE)
(72) Erfinder: Weiß, Uwe, 74722 Buchen (DE)
(74) Vertreter: Manitz, Finsterwald & Partner GbR

(56) Entgegenhaltungen:
- US-A- 3 245 285
- US-A- 5 609 061

## Beschreibung

Die Erfindung betrifft einen Rundschalttisch mit einem Teller, welcher in eine Kurventrommel eingreifende Mitnehmer aufweist, wobei der Teller relativ zu einem stationären Mittenteil über die Kurventrommel drehend antreibbar ist, die ihrerseits über zumindest ein Kraftübertragungselement von einem Motor zu einer Drehbewegung um ihre Längsachse beaufschlagbar ist.

Derartige, beispielsweise aus US-A-5 609 061 bekannte Rundschalttische, wie sie aus dem Stand der Technik in unterschiedlichen Ausführungsformen bekannt sind, dienen beispielsweise dazu, mehrere, auf dem genannten Teller bzw. auf darauf angeordneten Aufbauten gehaltene Werkstücke jeweils durch eine Rotation des Tellers von einer Bearbeitungs- oder Montagestation zu einer nächsten Bearbeitungs- oder Montagestation weiter zu transportieren. Dieser Transport erfolgt üblicherweise im Rahmen eines Taktbetriebes, bei dem der Teller mit jedem Takt um ein Winkelmaß gedreht wird, das beispielsweise dem Winkelabstand zwischen zwei benachbarten, auf dem Teller befindlichen Werkstücken entsprechen kann. Bei der Durchführung jedes Rotationstaktes ist es wünschenswert, dass die Drehbewegung des Tellers derart erfolgt, dass ein ruck- und stoßfreier Geschwindigkeitsverlauf der auf dem Teller befindlichen Werkstücke sichergestellt wird, was bedeutet, dass die Beschleunigung der Rotationsbewegung des Tellers zu Beginn eines Taktes erst langsam und dann schneller ansteigt, woraufhin sie erst schneller und schließlich langsam wieder den Wert Null erreicht. Bevorzugt entspricht der Beschleunigungsverlauf des Tellers während eines Taktes ungefähr einer Sinuskurve.

Während des Praxiseinsatzes von Rundschalttischen der beschriebenen Art kommt es vor, dass die Drehbewegung des Tellers in unbeabsichtigter Weise beispielsweise durch externe Bearbeitungsstationen blockiert wird. In diesem Fall muss der Antrieb des Tellers dann schnellstmöglich unterbrochen werden, um Beschädigungen von Werkstücken, Teilen des Tellerantriebs oder des Tellers selbst zu vermeiden.

Um dies zu erreichen, ist es gemäß Stand der Technik z.B. bekannt, direkt am Teller eine Überlastkupplung vorzusehen, die beispielsweise durch eine unterhalb des Tellers angeordnete Scheibe realisiert werden kann, welche zum Teller lediglich eine Rastverbindung aufweist, dabei aber mit dem eigentlichen Tellerantrieb fest verbunden ist. Erfolgt bei einer solchen Konstruktion ein Blockieren des Tellers, wird die Rastverbindung zwischen Scheibe und Teller gelöst, was zur Folge hat, dass die Scheibe weiterhin vom Tellerantrieb angetrieben werden kann, ohne dass sich der Teller selbst mitdreht, so dass sichergestellt wird, dass keine Beschädigungen auftreten. Nachteilig an dieser Ausführungsform ist die Tatsache, dass sie mit hohen Kosten verbunden ist, dass oftmals ein relativ hohes Ausrastmoment zwischen Scheibe und Teller benötigt wird und dass schließlich der Vorgang des Ausrastens elektrisch detektiert und an die Motorsteuerung zum Zwecke eines Motorstopps gemeldet werden muss.

Weiterhin ist es aus dem Stand der Technik bekannt, eine Überlastkupplung direkt im Bereich der Motorwelle vorzusehen, was zwar kostengünstiger als die vorstehend beschriebene Lösung, aber immer noch mit unerwünscht hohen Kosten verbunden ist. Weiterhin besteht ein gravierender Nachteil einer Überlastkupplung im Motorbereich darin, dass aufgrund des Kurvenverlaufs in der Kurventrommel hohe Drehmomentbelastungen am Teller infolge einer Blockierung zumindest zu Beginn und am Ende eines Rotationstaktes im Bereich des Motors nur zu einem geringen Drehmoment führen, welches oftmals nicht genügt, eine im Motorbereich vorgesehene Überlastkupplung zu aktivieren. Zu Beginn und am Ende eines Rotationstaktes verläuft nämlich der gerade wirksame Bereich der Kurve in der Kurventrommel nur leicht schräg zu einer Umfangslinie der Kurventrommel, so dass hier zwischen Kurventrommel und Teller eine erhebliche Untersetzung bewirkt wird, die dann bei großen Kräften am Teller zu nur geringen Kräften im Bereich der Motorwelle führt. Dies bewirkt dann oftmals trotz Vorsehung der Überlastkupplung im Bereich der Motorwelle eine Beschädigung von Werkstücken, des Tellers oder der Antriebselemente des Tellers.

Dokument US 3 245 285 offenbart eine Werkzeugmaschine, bei der eine in einem Gehäuse angeordnete Abtriebswelle von einem Motor über mehrere Zahnräder angetrieben wird, welche in einem relativ zum Gehäuse 12 drehbar gelagerten Getriebegehäuse angeordnet sind. Das mit einer Außenverzahnung versehene Gehäuse dieser Planetengetriebeanordnung ist wiederum mittels einer auf einer Schneckenwelle angeordneten Schnecke von einem zweiten Motor antreibbar. Die Abtriebswelle ist dadurch mit unterschiedlichen Geschwindigkeiten antreibbar. An den beiden Enden der Schneckenwelle sind zwei Dehnmessstreifenkraftaufnehmer angeordnet, die eine beispielsweise bei einer Blockierung der Abtriebswelle auftretende Überlast der Schneckenwelle detektieren können, um über eine Auslösesystem ein Abschalten der Maschine oder die Ausgabe eines Signals zu veranlassen.

Eine Aufgabe der Erfindung besteht darin, einen Rundschalttisch der eingangs genannten Art derart auszubilden, dass der für die Überlastkupplung zu betreibende Aufwand deutlich verringert wird, wobei insbesondere auch eine sichere Funktion der Überlastkupplung in jedem Augenblick eines Rotationstaktes sichergestellt werden soll.

Diese Aufgabe wird erfindungsgemäß durch die Merkmale des Anspruchs 1 gelöst.

Erfindungsgemäß wird anstelle der Vorsehung einer aufwändigen, mechanischen Rutschkupplung lediglich detektiert, ob sich infolge einer Blockierung des Tellers im Bereich der Kurventrommel, der Kraftübertragungselemente oder der Mitnehmer geringfügige Verformungen einstellen, wobei die Detektion einer solchen Verformung dann zu einem Abschalten des den Teller antreibenden Motors führt. Messaufnehmer, die derartige Verformungen detektieren können, sind als Standardbauelemente kostengünstig im Handel erhältlich, und die Auswertung der von solchen Messaufnehmern gelieferten Signale kann im Rahmen einer am oder im Rundschalttisch ohnehin vorhandenen Steuerelektronik problemlos erfolgen. Zur Realisierung des erfindungsgemäßen Prinzips ist es also lediglich nötig, einen kostengünstigen Messaufnehmer an einer geeigneten Stelle des Rundschalttisches anzubringen und die ohnehin vorhandene Steuerelektronik so zu programmieren, dass eine Auswertung des von diesem Messaufnehmer gelieferten Signals möglich wird. Folglich wird erfindungsgemäß der zu betreibende wirtschaftliche Aufwand gegenüber den aus dem Stand der Technik bekannten mechanischen Rutschkupplungen wesentlich verringert.

Der erfindungsgemäß eingesetzte Messaufnehmer wird als Dehnmessstreifen ausgebildet. Mittels eines Dehnmessstreifens lassen sich beispielsweise geringfügige Durchbiegungen von Lagerelementen der Kurventrommel oder der Kraftübertragungselemente oder auch im Bereich der Mitnehmer auftretende Verformungen detektieren. Der Einsatz von Dehnmessstreifen führt in vorteilhafterweise zu nur sehr geringen Kosten, und auch die Anbringung derartiger Messaufnehmer an einem geeigneten Bereich des Rundschalttisches ist aufgrund der geringen räumlichen Abmessungen der Messaufnehmer problemlos möglich.

Besonders vorteilhaft lässt sich die Erfindung einsetzen, wenn die zwischen Motor und Kurventrommel vorgesehenen Kraftübertragungselemente als Untersetzungsgetriebe ausgebildet sind, da in diesem Fall zwischen an der Kurventrommel und am Motor auftretenden Kräften erhebliche Unterschiede bestehen.

Erfindungsgemäß wird ein Dehnmessstreifen an einem Lagerelement der Kurventrommel und/oder an den Mitnehmern vorgesehen. Zudem kann auch ein Druckaufnehmer, insbesondere ein Piezoelement, gegenüber einem stirnseitigen Ende der Kurventrommel angeordnet werden.
Bei den letztgenannten Positionierungen eines Dehnmessstreifens oder eines Druckaufnehmers wird nämlich sichergestellt, dass tatsächlich ein Drehmoment bzw. eine Kraft im Bereich des Tellers bzw. im Bereich der direkt mit ihm gekoppelten Antriebselemente gemessen wird, ohne dass ein Untersetzungsgetriebe oder der gerade aktive Kurvenabschnitt der Kurventrommel zu einer Verringerung der zu messenden Drehmomente oder Kräfte führt. Dies stellt insbesondere zu Beginn und am Ende eines Rotationstaktes einen erheblichen Vorteil dar, da in den genannten Zeitabschnitten aufgrund des im Wesentlichen sinusförmigen Beschleunigungsverlaufs des Tellers bereits vergleichsweise geringe Kräfte im Bereich des Motors bzw. seiner Antriebswelle ausreichen, um im Bereich des Tellerantriebs vergleichsweise hohe Kräfte zu erzeugen. Um Beschädigungen im Bereich des Tellerantriebs zu vermeiden, ist es daher von wesentlicher Bedeutung, die für eine eventuelle Beschädigung des Tellerantriebs ggf. relevanten hohen Kräfte direkt im Bereich des Tellerantriebs zu messen und die im Bereich des Motors auftretenden, vergleichsweise geringen Kräfte außer Acht zu lassen, da diese zu Beginn und zum Ende eines Rotationstaktes keine Aussage über die am Tellerantrieb tatsächlich wirkenden Kräfte zulassen. Maßgeblich für einen Notstopp des Motors gemäß der Erfindung sind also ausschließlich die im Bereich des Tellerantriebs, d.h. die an einem Lagerelement der Kurventrommel oder an den Mitnehmern oder zusätzlich auch am stirnseitigen Ende der Kurventrommel wirkenden Kräfte bzw. Drehmomente.

Bei Vorsehung eines Dehnmessstreifens an einer Lagerplatte der Kurventrommel ist es besonders vorteilhaft, wenn die Kurventrommel in der betreffenden Lagerplatte mittels eines Festlagers, insbesondere mittels zweier Axiallager und eines Radiallagers gelagert ist. In diesem Fall bewirkt nämlich eine Blockierung des Tellers bei sich weiter drehender Kurventrommel eine auf die Kurventrommel in Richtung ihrer Drehachse wirkende Kraft, die aufgrund des Festlagers direkt auf die Lagerplatte übertragen wird, so dass sich eine geringfügige Durchbiegung der Lagerplatte ergibt, die mittels eines Dehnmessstreifens erfasst werden kann.

Der genannte Durchbiegungseffekt der Lagerplatte kann mittels eines Dehnmessstreifens besonders gut erfasst werden, wenn die Lagerplatte entlang ihres Umfangs lediglich voneinander beabstandete Verbindungsabschnitte aufweist, über die sie abschnittsweise mit stationären Teilen des Rundschalttisches verbunden ist. Die Lagerplatte wird also bevorzugt nicht in ihrem gesamten Umfangsbereich mit stationären Teilen des Rundschalttisches gekoppelt, sondern lediglich im Bereich voneinander beabstandeter Verbindungsabschnitte, was eine gewisse Beweglichkeit der Lagerplatte in Richtung der Drehachse der Kurventrommel erlaubt. So wird eine Durchbiegung der Lagerplatte begünstigt, wenn auf sie eine Kraft in Richtung der Drehachse der Kurventrommel ausgeübt wird. Dieser Durchbiegungseffekt wird insbesondere dann noch zusätzlich verstärkt, wenn die voneinander beabstandeten Verbindungsabschnitte der Lagerplatte um die Drehachse der Kurventrommel verteilt angeordnet sind.
Eine Durchbiegung der Lagerplatte lässt sich dann mittels eines Dehnmessstreifens besonders gut erfassen, wenn dieser zwischen zwei der genannten Verbindungsabschnitte an der Lagerplatte angebracht ist.

Weitere bevorzugte Ausführungsformen der Erfindung sind in den Unteransprüchen erläutert.

Die Erfindung wird nachfolgend anhand eines Ausführungsbeispiels unter Bezugnahme auf die Zeichnungen beschrieben; in diesen zeigen:
- Fig. 1: eine teilweise geschnittene Draufsicht auf einen erfindungsgemäßen Rundschalttisch bei abgenommenem Teller,
- Fig. 2: eine Draufsicht auf eine bei einem Rundschalttisch gemäß Fig. 1 zum Einsatz gelangende Lagerplatte in Richtung der Drehachse der Kurventrommel,
- Fig. 3: den Geschwindigkeitsverlauf eines Tellers eines Rundschalttisches gemäß den Fig. 1 und 2 während eines Rotationstaktes,
- Fig. 4: den zu Fig. 3 gehörenden Beschleunigungsverlauf des Tellers, und
- Fig. 5: den zu den Fig. 3 und 4 gehörigen Drehmomentverlauf am Teller.

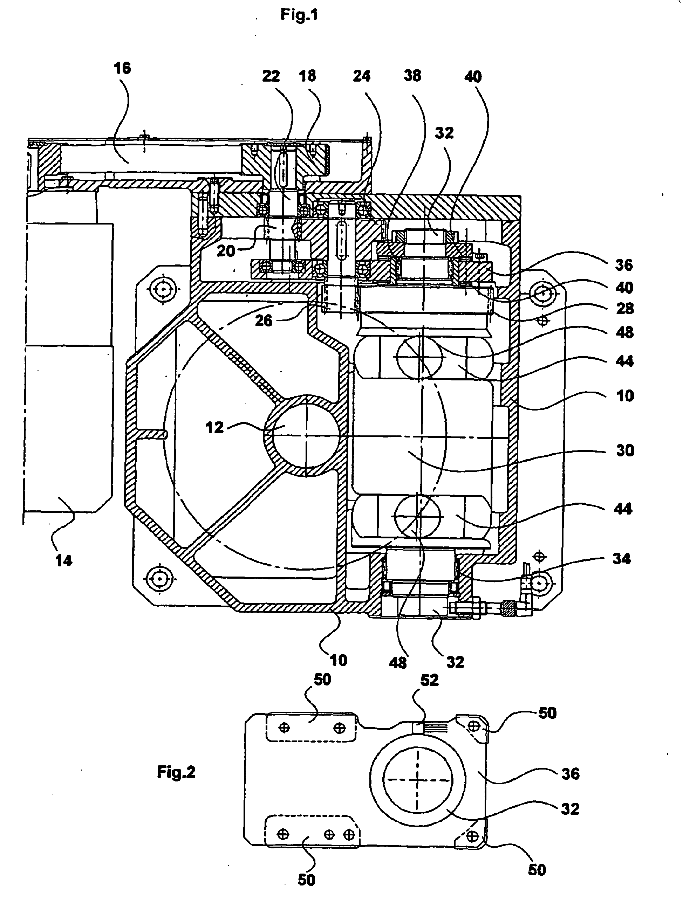

Fig. 1 zeigt in Draufsicht ein Gehäuseelement 10 eines Rundschalttisches, welches eine Aufnahme 12 für eine mit einem nicht dargestellten Teller gekoppelte Welle definiert. Mit dem Gehäuseelement 10 gekoppelt ist ein nur abschnittsweise dargestellter Motor 14, welcher über einen Zahnriemen 16 ein Zahnrad 18 drehend antreiben kann, das seinerseits drehfest mit einem weiteren Zahnrad 20 gekoppelt ist. Die Zahnräder 18, 20 besitzen dementsprechend eine gemeinsame Welle 22, welche in solchen Abschnitten des Rundschalttisches drehend gelagert ist, die zum Gehäuseelement 10 stationär angeordnet sind.

Das Zahnrad 20 kämmt mit einem größeren Zahnrad 24, welches drehfest mit einem weiteren Zahnrad 26 verbunden ist, dessen Durchmesser kleiner ist als der Durchmesser des Zahnrads 24. Auch die Zahnräder 24, 26 sind über eine gemeinsame Welle drehbar in stationär zum Gehäuseelement 10 angeordneten Lagerstellen gelagert.

Das Zahnrad 26 kämmt mit einer Außenverzahnung 28 einer Kurventrommel 30, wobei der Durchmesser der Außenverzahnung 28 deutlich größer gewählt ist als der Durchmesser des Zahnrads 26.

Durch die Größenverhältnisse der Zahnräder 18, 20, 24, 26 und der Außenverzahnung 28 ergibt sich zwischen dem Motor 14 und der Kurventrommel 30 eine Untersetzung.

Die Kurventrommel 30 ist drehbar um eine Welle 32 im Gehäuseelement 10 bzw. in damit fest verbundenen Teilen gelagert. Diese Lagerung besteht in dem der Außenverzahnung 28 abgewandten Endbereich der Welle 32 aus einem Loslager 34, welches als reines Radiallager ausgebildet ist und dementsprechend eine gewisse Bewegung der Welle 32 in Richtung ihrer Längsachse zulässt. Das andere Ende der Welle 32 ist in einer fest mit dem Gehäuseelement 10 verbundenen Lagerplatte 36 mittels eines Festlagers gelagert, wobei dieses Festlager aus einem Radiallager 38 und zwei Axiallagern 40, 42 besteht. Aufgrund des Festlagers 38, 40, 42 ist die Welle 32 der Kurventrommel 30 in der Lagerplatte 36 sowohl in Richtung der Drehachse der Kurventrommel 30 als auch senkrecht hierzu fixiert, was bedeutet, dass bei Bewegung der Kurventrommel 30 in Richtung ihrer Drehachse eine senkrecht zur Lagerplatte 36 auf sie wirkende Kraft erzeugt wird.

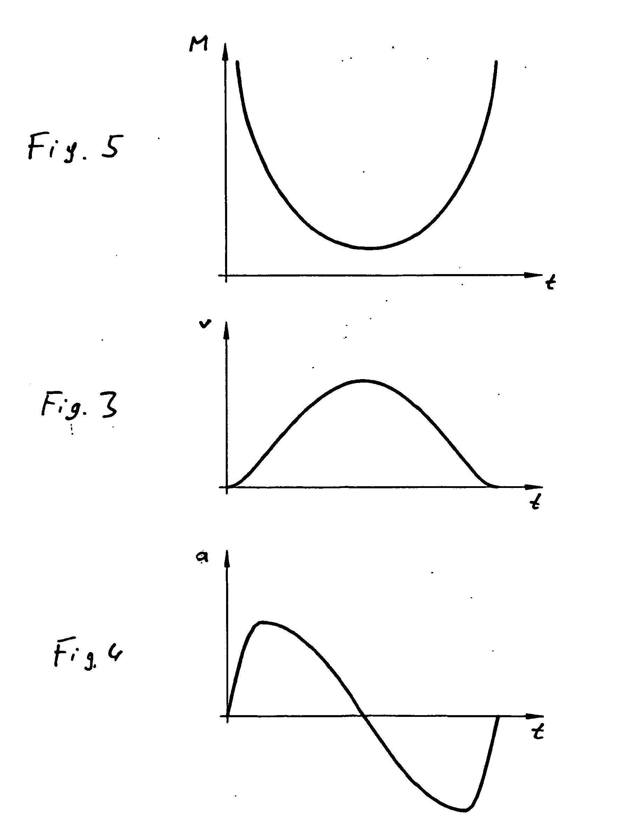

Die Kurventrommel 30 weist in aus dem Stand der Technik bekannter Art und Weise im Wesentlichen spiralförmig umlaufende Ausnehmungen bzw. Kurven 44 auf, in welche Mitnehmer 48 eines nicht dargestellten Tellers eingreifen. In Fig. 1 sind lediglich zwei Mitnehmer 48 dargestellt, wobei ein auf einen Rundschalttisch gemäß Fig. 1 montierter Teller insgesamt vier oder mehr über seinen Umfang gleich verteilte Mitnehmer 48 aufweist. Die Ausnehmungen bzw. Kurven 44 sind so ausgebildet, dass eine Drehung der Kurventrommel 30 um 360° einen oder mehrere Rotationstakte auslöst, während sich der Teller um einen definierten Winkel weiterdreht. Bei Durchführung eines solchen Rotationstaktes wird aufgrund des Kurvenverlaufs der Kurventrommel 30 der eingangs bereits erläuterte und nachfolgend in Verbindung mit den Fig. 3 bis 5 nochmals beschriebene Geschwindigkeitsverlauf des Tellers erzielt.

Fig. 2 zeigt die Lagerplatte 36 gemäß Fig. 1 mit der darin gelagerten Welle 32 der Kurventrommel 30. Die Lagerplatte 36 besitzt insgesamt vier über den Umfang der Welle 32 im Wesentlichen gleich verteilt angeordnete Verbindungsabschnitte 50, über die die Lagerplatte 36 mit stationären Gehäuseelementen 10 des Rundschalttisches verbunden ist. Diese Verbindungsabschnitte 50 sind voneinander beabstandet, so dass sich über den Umfang der Welle 32 verteilt angeordnete Bereiche ergeben, welche nicht fest mit Gehäuseelementen 10 des Rundschalttisches verbunden sind und die somit eine geringfügige Durchbiegung der Lagerplatte 36 in Richtung senkrecht zur Zeichenebene der Fig. 2, d.h. in Richtung der Drehachse der Welle 32, zulassen.

Zwischen zwei benachbarten Verbindungsabschnitten 50 ist oberhalb der Welle 32 erfindungsgemäß ein Dehnmessstreifen 52 vorgesehen, der an der Lagerplatte 36 angebracht und dazu geeignet ist, Durchbiegungen der Lagerplatte 36 in Richtung der Drehachse der Welle 32 zu erfassen. Die von handelsüblichen Dehnmessstreifen 52 erfassbaren Durchbiegungen können relativ gering sein und beispielsweise im Bereich von 1/1000 mm liegen.

Bei einer Anordnung gemäß den Fig. 1 und 2 ist die Durchbiegung der Lagerplatte 36 bei Beaufschlagung derselben mit einer senkrecht zu ihr wirkenden Kraft im Wesentlichen proportional zu der Widerstandsänderung des Dehnmessstreifens 52, so dass letztlich die elektronisch erfassbare Widerstandsänderung des Dehnmessstreifens 52 proportional zu der auf die Lagerplatte 36 wirkenden Axialkraft ist.

Fig. 3 zeigt den Geschwindigkeitsverlauf eines mit einem Rundschalttisch gemäß den Fig. 1 und 2 gekoppelten Tellers bzw. seiner Mitnehmer 48 während eines Rotationstaktes. Dieser Geschwindigkeitsverlauf weist die Form einer halben Sinuskurve auf, was bedeutet, dass die Drehbewegung eines Rotationstaktes langsam mit geringer Geschwindigkeit eingeleitet wird, woraufhin eine Steigerung der Geschwindigkeit bis zu einem Maximum erfolgt, so dass zum Ende des Rotationstaktes wieder eine langsame Geschwindigkeitsverringerung bis auf den Wert Null erfolgen kann.

Der zugehörige Beschleunigungsverlauf gemäß Fig. 4, der im Wesentlichen die Form einer vollen Sinuskurve aufweist, zeigt, dass die Beschleunigung zu Beginn eines Rotationstaktes ausgehend von einem Wert von Null ansteigt und am Ende eines Rotationstaktes wieder auf den Wert Null abfällt.

Die in den Fig. 3 und 4 gezeigten Geschwindigkeits- und Beschleunigungsverläufe ergeben sich bei konstanter Drehzahl des Motors 14 allein aufgrund der Ausformung der Ausnehmungen bzw. Kurven 44 in der Kurventrommel 30. Zu Beginn und zum Ende eines Rotationstaktes greifen zur Erzeugung entsprechend geringer Geschwindigkeiten des Tellers die Mitnehmer 48 in solche Bereiche der Ausnehmungen bzw. Kurven 44 ein, die entlang einer oder nur leicht schräg zu einer Umfangslinie der Kurventrommel 30 verlaufen, was bedeutet, dass aufgrund der in diesen Abschnitten des Rotationstaktes gegebenen Kurvenverläufe letztlich eine ggf. zusätzliche Untersetzung erzielt wird, welche dazu führt, dass auf den Teller bzw. dessen Antriebselemente (Mitnehmer 48) sehr große Drehmomente oder Kräfte wirken können, die bei einer Blockierung des Tellers zu einer Zerstörung des Tellerantriebs führen können. Der den Figuren 3 und 4 zugeordnete, am Teller vorhandene Drehmomentverlauf ist in Fig. 5 dargestellt und zeigt, dass das Drehmoment zu Beginn und am Ende eines Rotationstaktes sehr hoch ist.

Erfindungsgemäß bewirken diese hohen Drehmomente aber gleichzeitig auch eine mittels des Dehnmessstreifens 52 erfassbare Durchbiegung der Lagerplatte 36, so dass in diesem Fall rechtzeitig ein Abschalten des Motors 14 erfolgen kann.

### Bezugszeichenliste

- 10: Gehäuseelement
- 12: Wellenaufnahme
- 14: Motor
- 16: Zahnriemen
- 18: Zahnrad
- 20: Zahnrad
- 22: Welle
- 24: Zahnrad
- 26: Zahnrad
- 28: Außenverzahnung
- 30: Kurventrommel
- 32: Welle
- 34: Radiallager
- 36: Lagerplatte
- 38: Radiallager
- 40: Axiallager
- 42: Axiallager
- 44: Ausnehmungen, Kurven
- 48: Mitnehmer
- 50: Verbindungsabschnitte
- 52: Dehnmessstreifen

## Patentansprüche

1. Rundschalttisch mit einem Teller, welcher in eine Kurventrommel (30) eingreifende Mitnehmer (48) aufweist, wobei der Teller relativ zu einem stationären Mittenteil über die Kurventrommel (30) drehend antreibbar ist, die ihrerseits über zumindest ein Kraftübertragungselement (16, 18, 20, 24, 26, 28) von einem Motor (14) zu einer Drehbewegung um ihre Längsachse beaufschlagbar ist,
**dadurch gekennzeichnet,**
**dass** ein ein Ausgangssignal generierender, auf Druck und/oder Zug reagierender Messaufnehmer vorgesehen ist, wobei als Messaufnehmer ein Dehnmessstreifen (52) an einem Lagerelement (36) der Kur- ventrommel (30) und/oder an den Mitnehmern (48) vorgesehen ist und
**dass** weiterhin eine Auswerteeinheit zur Abgabe eines Motor-Stoppsignals bei Überschreitung eines Schwellwerts durch das Ausgangssignal vorgesehen ist.

2. Rundschalttisch nach Anspruch 1,
**dadurch gekennzeichnet,**
**dass** die zwischen Motor (14) und Kurventrommel (30) vorgesehenen Kraftübertragungselemente (16, 18, 20, 24, 26, 28) als Untersetzungsgetriebe ausgebildet sind.

3. Rundschalttisch nach einem der vorhergehenden Ansprüche,
**dadurch gekennzeichnet ,**
**dass** ein Druckaufnehmer gegenüber einem stirnseitigen Ende der Kurventrommel (30) vorgesehen ist.

4. Rundschalttisch nach einem der vorhergehenden Ansprüche,
**dadurch gekennzeichnet ,**
**dass** der Dehnmessstreifen (52) an einer Lagerplatte (36) der Kurventrommel (30) vorgesehen ist, in der die Kurventrommel (30) mittels eines Festlagers (38, 40, 42), insbesondere mittels Axial- und Radiallagern gelagert ist.

5. Rundschalttisch nach Anspruch 4,
**dadurch gekennzeichnet ,**
**dass** die Lagerplatte (36) entlang ihres Umfangs voneinander beabstandete Verbindungsabschnitte (50) aufweist, über die sie abschnittsweise mit stationären Teilen (10) des Rundschalttisches verbunden ist.

6. Rundschalttisch nach Anspruch 5,
**dadurch gekennzeichnet ,**
**dass** die voneinander beabstandeten Verbindungsabschnitte (50) der Lagerplatte (36) um die Drehachse der Kurventrommel (30) verteilt angeordnet sind.

7. Rundschalttisch nach Anspruch 6,
**dadurch gekennzeichnet ,**
**dass** der Dehnmessstreifen (52) zwischen zwei Verbindungsabschnitten (50) an der Lagerplatte (36) angebracht ist.

## Claims

1. A rotary indexing table comprising a turntable which has drivers (48) engaging into a barrel cam (30), with the turntable being rotatably drivable relative to a stationary center part via the barrel cam (30) which can in turn be acted on by a motor (14) via at least one force transmission element (16, 18, 20, 24, 26, 28) to make a rotary movement around its longitudinal axis,
**characterized in that**
a measurement sensor generating an output signal and reacting to pressure and/or tension is provided; wherein a strain gage (52) is provided as the measurement sensor at a support element (36) of the barrel cam (30) and/or at the drivers (48) and **in that** an evaluation unit is furthermore provided for the output of a motor stopping signal when the output signal exceeds a threshold value.

2. A rotary indexing table in accordance with claim 1, **characterized in that** the force transmission elements (16, 18, 20, 24, 26, 28) provided between the motor (14) and the barrel cam (30) are made as reduction gear transmissions.

3. A rotary indexing table in accordance with one of the preceding claims, **characterized in that** a pressure sensor is provided opposite an end face end of the barrel cam (30).

4. A rotary indexing table in accordance with any one of the preceding claims, **characterized in that** the strain gage (52) is provided at a support plate (36) of the barrel cam (30) in which the barrel cam (30) is supported by means of a fixed bearing (38, 40, 42), in particular by means of axial and radial bearings.

5. A rotary indexing table in accordance with claim 4, **characterized in that** the support plate (36) has mutually spaced connection sections (50) along its periphery via which it is sectionally connected to stationary parts (10) of the rotary indexing table.

6. A rotary indexing table in accordance with claim 5, **characterized in that** the mutually spaced connection sections (50) of the support plate (36) are arranged distributed around the axis of rotation of the barrel cam (30).

7. A rotary indexing table in accordance with claim 6, **characterized in that** the strain gage (52) is attached to the support plate (36) between two connection sections (50).

## Revendications

1. Table de commande circulaire comprenant un plateau, celui-ci comprenant des tocs d'entraînement (48) qui s'engagent dans un tambour à came (30), le plateau étant entraîné en rotation par rapport à une partie médiane stationnaire via le tambour à came (30), celui-ci étant entraîné de son côté, via au moins un élément de transmission de force (16, 18, 20, 24, 26, 28), par un moteur (14) pour exécuter un mouvement de rotation autour de son axe longitudinal,
**caractérisée en ce qu'**il est prévu un capteur de mesure qui génère un signal de sortie et réagit à la pression et/ou à l'attraction, pour lequel il est prévu à titre de capteur de mesure une jauge de contraintes (52) sur un élément de palier (36) du tambour à came (30) et/ou sur les tocs d'entraînement (48), et
**en ce qu'**il est en outre prévu une unité d'évaluation pour délivrer un signal d'arrêt au moteur lors du dépassement d'une valeur seuil par le signal de sortie.

2. Table de commande circulaire selon la revendication 1,
**caractérisée en ce que** les éléments de transmission de force (16, 18, 20, 24, 26, 28) prévus entre le moteur (14) et le tambour à came (30) sont réalisés sous forme de transmission à démultiplication.

3. Table de commande circulaire selon l'une des revendications précédentes,
**caractérisée en ce qu'**il est prévu un capteur de pression en vis-à-vis d'une extrémité frontale du tambour à came (30).

4. Table de commande circulaire selon l'une des revendications précédentes,
**caractérisée en ce que** la jauge de contraintes (52) est prévue sur une plaque de palier (36) du tambour à came (30), dans laquelle le tambour à came (30) est monté au moyen d'un palier fixe (38, 40, 42) en particulier au moyen de paliers axiaux et radiaux.

5. Table de commande circulaire selon la revendication 4,
**caractérisée en ce que** la plaque de palier (36) comprend le long de sa périphérie des tronçons de liaison (50) écartés les uns des autres, via lesquels elle est reliée par tronçons à des parties stationnaires (10) de la table de commande circulaire.

6. Table de commande circulaire selon la revendication 5,
**caractérisée en ce que** les tronçons de liaison (50) écartés les uns des autres de la plaque de palier (36) sont agencés de façon répartie autour de l'axe de rotation du tambour à came (30).

7. Table de commande circulaire selon la revendication 6,
**caractérisée en ce que** la jauge de contraintes (52) est montée sur la plaque de palier (36) entre deux tronçons de liaison (50).
